# EUROPÄISCHE PATENTSCHRIFT

(11) **EP 1 114 203 B1**
(45) Veröffentlichungstag und Bekanntmachung des Hinweises auf die Patenterteilung: **02.05.2002**
(21) Anmeldenummer: 99947306.9
(22) Anmeldetag: 10.09.1999
(51) Int. Cl.: C25B 9/00, C25B 3/02

(54) **REAKTOR SOWIE VERFAHREN ZUR DURCHFÜHRUNG ELEKTROCHEMISCHER UMSETZUNGEN**
REACTOR AND METHOD FOR CARRYING OUT ELECTROCHEMICAL REACTIONS
REACTEUR ET PROCEDE POUR EFFECTUER DES REACTIONS ELECTROCHIMIQUES

(30) Priorität: 10.09.1998 DE 19841302
(43) Veröffentlichungstag der Anmeldung: 11.07.2001
(73) Patentinhaber: INSTITUT FÜR MIKROTECHNIK MAINZ GmbH, 55129 Mainz-Hechtsheim (DE)
(72) Erfinder: LÖWE, Holger, D-55276 Oppenheim (DE); KÜPPER, Michael, D-65344 Eltville-Martinsthal (DE); ZIOGAS, Athanassios, D-55122 Mainz (DE)
(74) Vertreter: Fuchs Mehler Weiss & Fritzsche
(86) Internationale Anmeldenummer: EP9906684
(87) Internationale Veröffentlichungsnummer: WO0015872

(56) Entgegenhaltungen:
- EP-A- 0 582 192
- DE-A- 2 502 840
- FR-A- 2 298 615
- US-A- 4 406 768

## Beschreibung

Die Erfindung betrifft einen Reaktor und ein Verfahren zur Durchführung elektrochemischer Umsetzungen gemäß des Oberbegriffs des Anspruchs 1 bzw. des Anspruchs 21.

Kapillarspalt-Zellen, bei denen der Elektrolyt parallel zur Oberfläche der eng beabstandeten Elektroden strömt, sind für den Einsatz bei organischen Synthesen in Lösungen mit kleiner elektrolytischer Leitfähigkeit bekannt. F. Beck und H. Guthke beschreiben in Chemie-Ingenieur-Technik, Heft 17, 1969, 41. Jahrgang, Seiten 943-950, eine Kapillarspalt-Zelle für die Acrylnitril-Elektrolyse. Zwischen den beiden kreisförmigen Elektroden befinden sich parallel zueinander angeordnete, kreisförmige Platten, die bipolar in Serie geschaltet sind. Durch radial angeordnete Streifen aus Polyesterfolie beträgt der Platttenabstand 125 µm. Die Reaktionsmischung durchströmt die horizontalen Kapillarspalten, rieselt an der Außenseite des Elektrodenstapels herab und wird einem Kühler zugeleitet.

In der DE-OS-25 55 958 wird eine Kapillarspaltzelle vorgestellt, bei der laminare Flußbedingungen zur Unterbindung der Rückdiffusion von Elektrolyseprodukten an die Gegenelektrode benutzt werden. Durch diese laminaren Strömungsbedingungen in Verbindung mit einer Anpassung von Volumenfluß und Stromfluß unter der Beschränkung auf mittlere Umsätze wird eine hohe Selektivität auch ohne die Verwendung eines Diaphragmas erreicht. Als Elektrolysezelle wird eine zylindrische Kapillarspaltzelle nach Beck verwendet.
Um die kontrollierte Diffusion bei gasentwickelnden elektrolytischen Reaktionen nicht zu stören, wird eine Rillen aufweisende Gegenelektrode vorgeschlagen, wobei der Grund der Rillen eine Isolierschicht aufweist.

Mit der aus zylindrischen Platten aufgebauten Kapillarspaltzelle nach Beck wird nur in Ebenen senkrecht zur Elektrodenoberfläche aufgrund der geringen Höhe des Kapillarspalts (in der Regel < 1 mm) eine Laminarität der Strömung erreicht. Dies kann zur Vermeidung einer Rückdiffusion von Elektrolyseprodukten von der Elektrode zur Gegenelektrode ausreichend sein. In Ebenen parallel zur Elektrodenoberfläche wird jedoch aufgrund fehlenden seitlichen Führungen keine laminare Strömung und damit keine homogene Fließgeschwindigkeitsverteilung erreicht. Bei der Strömung des Edukts vom Mittelpunkt der kreisförmigen Platten radial nach außen vergrößert sich das dem Eduktstrom zur Verfügung stehende Volumen, was eine Abnahme der Fließgeschwindigkeit und ein Auftreten von Querströmungen zur Folge hat. In Bereichen mit deutlich langsamerer Fließgeschwindigkeit, sogenannten Totwasserbereichen, steigt die Verweilzeit von Edukten und Produkten gegenüber schneller fließenden Bereichen an, was zu einer Abnahme der Selektivität der Reaktion zur Folge haben kann. Aufgrund dieser inhomogenen Fließgeschwindigkeitsverteilung ist eine Optimierung im Hinblick auf die Selektivität und die Ausbeute einer Reaktion nur begrenzt möglich. Des weiteren kann in Bereichen mit verlangsamter Fließgeschwindigkeit aufgrund des verminderten Wärmeabtransports lokal eine Temperaturerhöhung erfolgen, die eine weitere Absenkung der Selektivität zur Folge haben kann.

In der DE-OL 20 22 696 wird eine Elektrolysezelle zur Herstellung von Adipinsäuredinitril beschrieben. Die Elektrolysezelle besteht aus einem oder mehreren Sätzen einer Anodenplatte, einer Kathodenplatte, einer zwischen beiden Platten angeordneten Membrane sowie aus zwischen jeweils einer Platte und der Membran ausgebildeten Kanälen. Die Kanäle weisen ein Umkehrteil zum mäanderförmigen Umleiten der Strömung auf, wobei das Umkehrteil außerhalb des das elektrische Feld aufweisenden Raumes zwischen Anode und Kathode angeordnet ist. Hierdurch wird ein Elektrolytkanal einer gesamten Länge erhalten, die wesentlich größer ist als die Länge einer Seite der Elektrode. Der Kanal wird durch ein Abstandsstück aus isolierendem Material gebildet und von oben und unten von der Membrane bzw. einer Elektrodenplatte begrenzt. Der Kanal hat eine Breite von 0,5 bis 50 cm und eine Höhe von 0,5 mm bis 5 mm.

Diese Elektrolysezelle weist gegenüber den zuvor beschriebenen Zellen aufgrund des Kanals die Möglichkeit auf, unter laminaren Strömungsbedingungen zu arbeiten. Jedoch liegen bei den angegebenen Werten für Breite und Höhe des Kanals, insbesondere in Verbindung mit den Umkehrteilen, nur in einem begrenzten Bereich des Volumenstroms laminare Strömungsbedingungen vor. Darüber hinaus erfordert auch diese Elektrolysezelle den Einsatz von Leitsalz zur Erniedrigung des ohmschen Widerstandes. Hiermit verbunden sind ohmsche Wärmeverluste und damit verbunden eine Absenkung der Selektivität und Ausbeute sowie eine aufwendige Abtrennung des Leitsalzes vom gewünschten Produkt.

Der Erfindung liegt daher die Aufgabe zugrunde, einen Reaktor der eingangs erwähnten Art aufzuzeigen, bei dem eine Minimierung des Spannungsabfalls im Elektrolyten ohne oder mit nur einem geringen Einsatz eines Leitsalzes möglich ist und bei dem eine enge Verweilzeitverteilung der Edukte und Produkte und damit eine hohe Opimierbarkeit der Reaktionsbedingungen im Hinblick auf Selektivität und Ausbeute vorliegt. Weiterhin ist es Aufgabe der Erfindung, ein Verfahren der eingangs erwähnten Art zur Vefügung zu stellen, das die zuvor erwähnten Vorteile aufweist.

Die Aufgabe wird mit einem Reaktor nach Anspruch 1 gelöst, bei dem der Kapillarspalt, der die Elektroden voneinander trennt, mindestens einen Kanal einer Höhe kleiner gleich 200 µm und einer Breite kleiner gleich 10 mm als Reaktionsraum aufweist.

Der Kanal als seitliche Führung des Eduktstroms ermöglicht laminare Strömungsverhältnisse auch in Ebenen parallel zur Elektrodenoberfläche, während die alleinige obere und untere Begrenzung durch den Kapillarspalt gemäß der Kapillarspaltzelle nach Beck nur in Ebenen senkrecht zur Elektrodenoberfläche laminare Strömungsverhältnisse begünstigt. Durch die Wahl der Höhe des Kanals kleiner gleich 200 µm wird in einem weiten Volumenstrombereich über den gesamten Kanalquerschnitt laminare Strömungsverhältnisse und damit eine homogene Fließgeschwindigkeitsverteilung im Kanal erreicht. Dies ermöglicht über große Wertebereiche der Volumenströme eine genaue und reproduzierbare Einstellbarkeit der Verweildauer der Edukte und Produkte. Damit wird eine Optimierbarkeit der Reaktionsparameter in weiten Bereichen im Hinblick auf höhere Selektivität und Ausbeute der betreffenden Reaktion erreicht.

Aufgrund der Höhe des Kanals und damit des Elektrodenabstandes kleiner gleich 200 µm überlappen sich die Diffusionsschichten der Anode und der Kathode, die für viele Elektrolytsysteme jeweils im Bereich von etwa 100 µm liegen. Hierdurch wird der Anteil des Elektrolyten am Gesamtwiderstand eliminiert. Der Gesamtwiderstand setzt sich damit im wesentlichen nur noch aus den Widerständen der Diffusionsgrenzschichten der Anode und der Kathode zusammen, so daß auch ohne Einsatz eines Leitsalzes oder mit nur geringen Mengen eines Leitsalzes ein geringer ohmscher Widerstand erreicht wird. Dies ist insbesondere bei Systemen mit kleiner elektrolytischer Leitfähigkeit, beispielsweise in der elektroorganischen Synthese, von entscheidendem Vorteil. Vorteilhaft können daher ohmsche Wärmeverluste und damit das Auftreten unerwünschter Neben- oder Folgereaktionen vermindert werden. Zudem brauchen nur geringere Mengen an Leitsalz oder gar kein Leitsalz von der Produktlösung wieder abgetrennt werden. Insgesamt können daher elektrochemische Synthesen mit dem erfindungsgemäßen Reaktor wirtschaftlicher durchgeführt werden.

Bevorzugt weist der Kapillarspalt des Reaktors eine Höhe kleiner gleich 150 µm, besonders bevorzugt eine Höhe von 1 µm bis 100 µm auf. Diese besonders bevorzugte Ausführungsform ist insbesondere für elektroorganische Synthesen mit sehr kleiner elektrolytischer Leitfähigkeit von Vorteil.

Der Kapillarspalt kann auch mehrere Kanäle einer Höhe kleiner gleich 200 µm aufweisen. Um auch über die einzelnen Kanäle eine homogene Fließgeschwindigkeitsverteilung zu erreichen, weisen die Kanäle vorteilhaft gleiche Abmessungen auf. Neben geradlinig verlaufenden Kanälen eignen sich auch bogen- oder mäanderförmig verlaufende Kanäle, wodurch im Vergleich zur Kanallänge eine kompakte Bauform des Reaktors erzielt werden kann.

Zur seitlichen Führung des Eduktstroms bzw. der Eduktströme eignen sich Kanäle mit Breiten kleiner gleich 10 mm, bevorzugt von 5 µm bis 1 mm. Ebenfalls bevorzugt wird über die Länge des Kanals der Kanalquerschnitt beibehalten, so daß über die gesamte Kanallänge die gleiche Fließgeschwindigkeitsverteilung vorliegt.

Zur Einstellung laminarer Strömungsbedingungen weist der Kanal bzw. weisen die Kanäle vorteilhaft ein Verhältnis der Breite b zur Länge I kleiner als 1 : 5, bevorzugt kleiner als 1 : 50 auf.

Nach einer Ausführungsform ist in dem Kapillarspalt zwischen den Elektroden eine Isolierschicht angeordnet, die vorteilhaft an beide Elektrodenoberflächen grenzt. Die Isolierschicht weist zur Bildung des Kanals oder der Kanäle eine Ausnehmung bzw. mehrere Ausnehmungen auf. Jede Ausnehmung steht in Verbindung mit der Elektrode und der Gegenelektrode sowie Strukturen zur Eduktzuführung und Produktabführung.

Gemäß der bevorzugten Ausführungsform ist die Isolierschicht eine Isolierfolie, deren Dicke der des Kapillarspalts entspricht. Die Folie weist einen Schlitz oder mehrere Schlitze zur Bildung des Kanals bzw. der Kanäle auf.

Vorteilhaft weist mindestens eine Elektrode Strukturen in Form von Ausnehmungen auf, die eine Zu- und Abführung des Elektrolyten zu bzw. von dem Kanal dient. Diese Strukturen sind vorteilhaft derart bemessen, daß eine unter den Kanälen gleiche Fließgeschwindigkeitsverteilung erreicht werden kann.

Mindestens eine Elektrode weist im Bereich des Kanals oder der Kanäle des Kapillarspalts eine plane Oberfläche auf. Zur Erzielung einer auf der Elektrode und der Gegenelektrode verschiedenen Stromdichte kann es jedoch auch von Vorteil sein, daß mindestens eine Elektrode jeweils im Bereich des Kanals oder der Kanäle des Kapillarspalts eine Nut aufweist.

Nach einer bevorzugten Ausführungsform ist der Reaktionsraum des erfindungsgemäßen Reaktors als ungeteilte Elektrolysezelle ausgebildet.

Gemäß einer anderen Ausführungsform weist jedoch der Kapillarspalt zwischen den Elektroden ein Diaphragma auf. Zwischen dem Diaphragma und mindestens einer Elektrode befindet sich mindestens ein Kanal. Vorteilhaft weist jeder der beiden Räume zwischen dem Diaphragma und den beiden Elektroden mindestens einen als Reaktionsraum dienenden Kanal auf.

Vorteilhaft bildet das Diaphragma die Isolierschicht. Darüber hinaus ist es von Vorteil, wenn das Diaphragma zur Bildung des Kanals oder der Kanäle einoder beidseitig Nuten aufweist. Das Diaphragma wird hierzu vorteilhaft von einem einstückigen Mikrostrukturkörper aus einem ionenleitenden Polymer gebildet.

Um die Umsetzungstemperatur gezielt einstellen zu können, ist vorteilhaft mindestens ein Temperierelement, beispielsweise ein Wärmetauscher oder ein Peltierelement, mit mindestens einer Elektrode thermisch verbunden. Aufgrund der mit der elektrischen Leitfähigkeit verbundenen thermischen Leitfähigkeit sowie des Kontakts mit dem Elektrolyt ist eine Temperierung über die Elektrode von Vorteil. Aufgrund der kleinen Breite weisen die Kanäle ein hohes Oberflächen-Volumenverhältnis auf, was eine schnelle Wärmeübertragung ohne ein Auftreten von Bereichen mit stark unterschiedlicher Temperatur ermöglicht.

Besonders vorteilhaft ist mindestens eine Elektrode selbst als Temperierelement ausgebildet.

Der erfindungsgemäße Reaktor eignet sich besonders zur parallelen Durchführung elektrochemischer Umsetzungen. Hierzu weist ein Kapillarspallt mehrere Nuten auf oder/ und mehrere plattenförmige Elektroden sind im wesentlichen parallel zueinander angeordnet und von durch jeweils mindestens einen Kanal aufweisenden Kapillarspalt voneinander getrennt. In diesen Stapel von Elektroden sind vorteilhaft Temperierelemente integriert, beispielsweise derart, daß abwechselnd zwischen aufeinanderfolgenden Elektroden jeweils ein Kapillarspalt und jeweils ein Temperierelement angeordnet ist.

Nach einer Ausführungsform ist den beiden Seiten einer plattenförmigen Elektrode jeweils eine Gegenelektrode gegenüberliegend angeordnet.

Bevorzugt ist zwischen zwei Elektroden die keinen Kapillarspalt bilden ein Temperierelement angeordnet oder mindestens eine Elektrode als Temperierelement ausgebildet.

Nach dem erfindungsgemäßen Verfahren zur Durchführung einer elektrochemischen Umsetzung in einem Reaktor wird der Eduktstrom durch mindestens einen im Kapillarspalt vorhandenen, als Reaktionsraum dienenden Kanal einer Höhe kleiner gleich 200 µm und einer Breite 6 kleiner gleich 10 mm geleitet, wobei der Volumenstrom des Eduktstroms derart bemessen wird, daß die Strömung des Eduktstroms über die Länge des Kanals laminar ist. Der verwendete Reaktor weist mindestens eine Elektrode und eine Gegenelektrode auf, die durch einen Kapillarspalt voneinander getrennt sind.

Vorteilhaft ist neben dem Volumenstrom des Eduktstroms auch die Ausbildung des Kanals derart gewählt, daß die Strömung des Eduktstroms auch in einem großen Wertebereich des Volumenstroms über die Länge des Kanals laminar ist.

Nach einer Ausführungsform wird der Eduktstrom in mehrere Teilströme aufgespalten. Die Teilströme werden durch jeweils einen im Kapillarspalt vorhandenen, als Reaktionsraum dienenden Kanal einer Höhe kleiner gleich 200 µm geleitet. Der Volumenstrom des Eduktstroms wird derart bemessen, daß jeweils die Strömung der Teilströme laminar ist. Vorteilhaft werden die Abmessungen und Ausbildungen der Kanäle derart gewählt, daß die Volumenströme der Teilströme die gleiche Größe aufweisen. Dies kann durch gleiche Kanallängen bei gleichem Kanalquerschnitt erreicht werden.

Vorteilhaft werden nach diesem Verfahren elektrochemische Umsetzungen ohne Leitsalz durchgeführt, was durch Kanäle in einem Kapillarspalt einer Höhe kleiner gleich 200 µm, bevorzugt einer Höhe kleiner gleich 150 µm, besonders bevorzugt im Bereich von 1 µm bis 100 µm, ermöglicht wird. Daher kann der Einsatz zum Teil teurer Leitsalze sowie deren aufwendige Abtrennung deutlich reduziert oder gar eingespart werden.

Gemäß dieses Verfahrens wird vorteilhaft mindestens ein erfindungsgemäßer Reaktor verwendet. Bei der Verwendung mehrerer Reaktoren werden diese bevorzugt fluidisch parallel geschaltet, so daß damit eine beliebige Erhöhung des Stoffumsatzes erreicht werden kann. Von entscheidendem Vorteil hierbei ist die Möglichkeit, die in einem einzelnen Reaktor optimierten Reaktionsparameter beibehalten zu können. Eine aufwendige und mit einem erheblichen Risiko verbundene Überführung des Verfahrens vom Labormaßstab in eine großtechnische Fertigung entfällt. Andererseits gestattet es schon ein einzelner Reaktor, elektrochemische Umsetzungen in kleinen Mengen, beispielsweise im Einsatz in der Wirkstoffforschung, durchzuführen.

Eine nach diesem Verfahren bevorzugte elektrochemische Umsetzung ist die Oxidation von in 4-Stellung substituiertem Methylbenzol zu Benzaldehyd oder Benzaldehydacetal unter Beibehaltung des Substituenten in 4-Stellung. Diese Benzaldehyde bzw. Benzaldehydacetale, die nach bekannten Verfahren ineinander umzuwandeln sind, stellen Vorprodukte für Wirkstoffe, Riech- und Aromastoffe dar. Eine besonders bevorzugte Umsetzung ist hierbei die Oxidation von 4-Methoxymethylbenzol zu 4-Methoxybenzaldehyd in Gegenwart von Methanol als Lösungsmittel und Kaliumfluorid als Leitsalz mit einer Konzentration von 0 bis 0,1 mol/l.

Der erfindungsgemäße Reaktor sowie das Verfahren eignen sich zur Durchführung von elektrochemischen Umsetzungen, insbesondere organischer Verbindungen, wobei aufgrund der in dem als Reaktionsraum dienenden Kanal vorherrschenden laminaren Strömungsverhältnissen eine enge Verweilzeitverteilung erreicht wird und damit die Reaktionsbedingungen sehr präzise optimierbar sind. Damit kann eine Steigerung der Selektivität und der Ausbeute elektrochemischer Umsetzungen erzielt werden.

Die Erfindung wird nachfolgend anhand von in Figuren schematisch dargestellten Ausführungsbeispielen näher erläutert. Es zeigen:
- Fig. 1a: Elektrode und Gegenelektrode sowie eine einen Schlitz aufweisende Isolierfolie in perspektivischer Darstellung,
- Fig. 1b: den Reaktor nach Fig. 1 im Querschnitt von der Seite,
- Fig. 2a: Elektrode und Gegenelektrode sowie eine mehrere Schlitze aufweisende Isolierfolie in perspektivischer Darstellung,
- Fig. 2b: den Reaktor nach Fig. 2a im Querschnitt von der Seite, geschnitten im Bereich der Kanäle,
- Fig. 2c: den Reaktor nach Fig. 2a im Querschnitt von der Seite, geschnitten im Bereich der Fluidzuführung,
- Fig. 3: einen Reaktor mit Nuten aufweisender Elektrode im Querschnitt von der Seite,
- Fig. 4: einen Reaktor mit mehreren, parallel zueinander angeordneten Elektroden im Querschnitt von der Seite,
- Fig. 5: einen Reaktor mit zwischen zwei Isolierfolien angeordnetem Diaphragma im Querschnitt von der Seite,
- Fig. 6: einen Reaktor mit Isolierfolie, Diaphragma und einer Nuten aufweisenden Elektrode im Querschnitt von der Seite,
- Fig. 7: einen Reaktor mit Diaphragma und zwei, Nuten aufweisenden Elektroden im Querschnitt von der Seite,
- Fig. 8: einen Reaktor mit beidseitig Nuten aufweisendem Diaphragma im Querschnitt von der Seite.

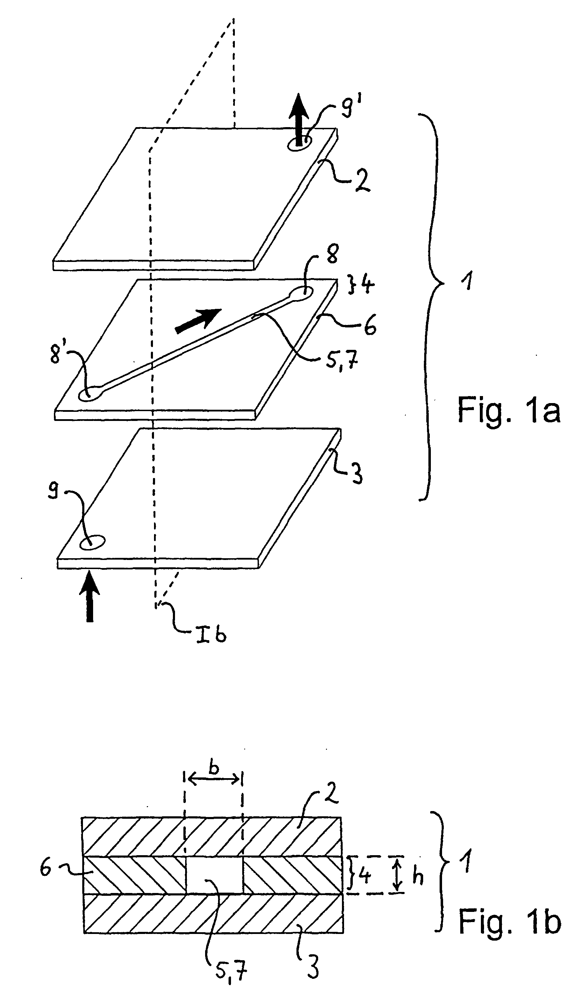

Der in Fig. 1a und 1b schematisch dargestellte Reaktor 1 weist eine Elektrode 2 und eine Gegenelektrode 3 auf, die jeweils als Platte mit planer Oberfläche ausgebildet und parallel zueinander, nur von einem Kapillarspalt 4 getrennt, angeordnet sind. In Fig. 1a sind die Komponenten des Reaktors getrennt voneinander perspektivisch dargestellt. In dem Kapillarspalt 4 ist eine Isolierfolie 6 angeordnet, die gleichzeitig als Abstandshalter der beiden Elektroden 2, 3 dient. Die Folie weist zwei Bohrungen 8, 8' auf, die durch einen zu beiden Seiten der Folie 6 hin offenen Schlitz 7 miteinander verbunden sind. Der Schlitz 7 wird durch die beiden Elektroden 2, 3 abgedeckt und bildet damit einen Kanal 5 aus. Die Fluidzuführung wird über eine Bohrung 9 in der Elektrode 3 und die Fluidabführung über eine Bohrung 9' in der Elektrode 2 ermöglicht, wobei die Bohrungen 9, 9' jeweils mit den Bohrungen 8' bzw. 8 der Isolierfolie 6 in Verbindung stehen.

Ein durch den Kanal 5 geleiteter Eduktstrom bildet sich dadurch laminar aus, daß dieser eine Begrenzung nicht nur in der Höhe h, mit h kleiner gleich 200 µm, durch die beiden Elektroden 2, 3, sondern auch in der Breite b über die Seitenwände des Schlitzes 7 der Isolierfolie 6 erfährt. Der Reaktionsraum weist durch die Kanalstruktur keine Bereiche auf, in denen Querströmungen oder Totwasserbereiche auftreten. Die Verweildauer eines durch den Kanal geleiteten Edukts kann damit genau eingestellt werden.

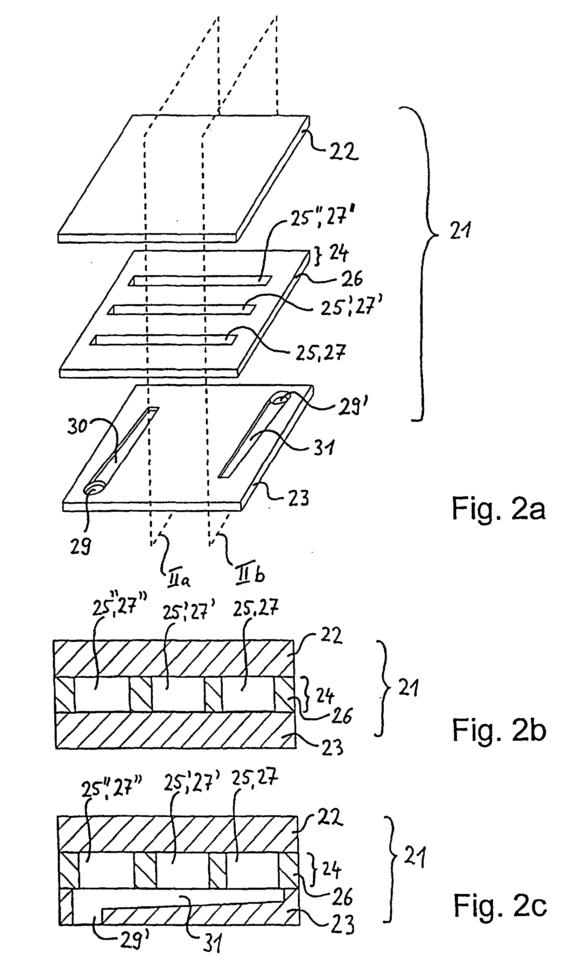

Der in den Figuren 2a bis 2c schematisch dargestellte Reaktor 21 weist zwischen dem Elektrodenpaar 22, 23 einen Kapillarspalt 24 auf, in dem drei Kanäle 25, 25', 25" als Reaktionsräume angeordnet sind. Die Kanäle sind als Schlitze 27, 27', 27" in eine zwischen den Elektroden 22, 23 befindlichen Isolierfolie 26 eingebracht. Die Kanäle 25, 25', 25" stehen seitlich untereinander fluidisch nicht in Verbindung. Für die Fluidzuführung und -abführung sind in der unteren Elektrode 23 nutenartige Strukturen 30 bzw. 31 sowie mit diesen in Verbindung stehende Bohrungen 29 bzw. 29' vorgesehen. Der Reaktor ist in Fig. 2c im Bereich der Bohrung 29' und der Struktur 31 im Querschnitt von der Seite dargestellt. Die Struktur 31 dient als Sammler der aus den Kanälen 25, 25', 25" fließenden Teilströme und führt diese der Bohrung 29' zu.

Diese Ausführungsform ermöglicht es, zwischen zwei Elektroden eine Vielzahl von kanalartigen Reaktionsräumen vorzusehen. Der zur Verfügung stehende Reaktionsraum ist damit nur geringfügig kleiner als bei bekannten Reaktoren, deren Kapillarspalt komplett als Reaktionsraum dient. Jedoch ermöglichen erst die Kanäle einer Höhe kleiner gleich 200 µm laminare Strömungsbedingungen bei deutlich verringertem ohmschen Widerstand und damit eine bessere Optimierbarkeit der Reaktionsparameter.

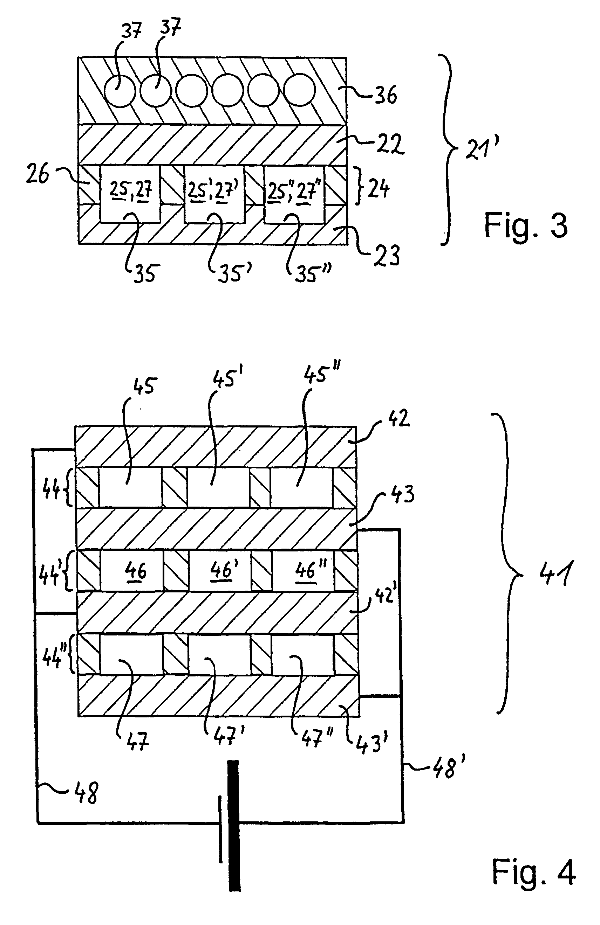

Der Reaktor 21' nach Fig. 3 weist im Gegensatz zu den Reaktoren nach den vorhergehenden Figuren eine Gegenelektrode 23 auf, die mit Nuten 35, 35', 35" versehen ist. Elektrode 22 und Gegenelektrode 23 sind auch hier durch eine Schlitze 27, 27', 27" aufweisende Isolierfolie 26 voneinander getrennt. Die hierdurch gebildeten Kanäle 25, 25', 25" einer Höhe kleiner gleich 200 µm werden nach unten durch die Nuten 35, 35', 35" begrenzt. Damit weist jeder als Reaktionsraum dienende Kanal 25, 25', 25" eine von der Oberfläche der Elektrode 22 größere Oberfläche der Gegenelektrode auf. Die hiermit erreichbare unterschiedliche Stromdichte auf der Elektrode 22 und der Gegenelektrode 23 kann gezielt beispielsweise zur Vermeidung von Nebenreaktionen an der Elektrode eingesetzt werden.
Des weiteren weist der Reaktor 21' ein auf der Elektrode 22 angeordnetes und mit ihr thermisch verbundenes Temperierelement 36 auf. Durch die Bohrungen 37 kann ein Heiz- oder Kühlmedium geleitet werden.

Eine kompakte Bauform des Reaktors kann besonders dadurch erzielt werden, daß mehrere plattenförmige Elektroden, jeweils von einem mindestens einen Kanal einer Höhe kleiner gleich 200 µm aufweisenden Kapillarspalt voneinander getrennt, parallel zueinander angeordnet werden. Ein Ausführungsbeispiel hierzu ist in Fig. 4 schematisch dargestellt. Zwischen vier Elektroden 42, 43, 42', 43' befinden sich drei Kapillarspalte 44, 44', 44", die jeweils Kanäle 45, 45', 45"; 46, 46', 46" bzw. 47, 47', 47" aufweisen. Als Elektroden 43, 42' dienen dünne Platten, deren beide Seiten als Elektrodenoberfläche dienen. Die mittlere Elektrode 43 und die untere Elektrode 43' sind als Gegenelektroden zu den beiden Elektroden 42, 42' bzw. zu der Elektrode 42' geschaltet. Es ist jedoch auch möglich, die mittleren Elektroden 43, 42' bipolar zu schalten, wobei nur die beiden äußeren Elektroden 42, 43' als Elektrode bzw. Gegenelektrode bestromt werden.

Während in den vorhergehenden Figuren Ausführungsbeispiele mit ungeteilten Reaktionsräumen dargestellt sind, beziehen sich die nachfolgenden Figuren auf Ausführungsbeispiele mit durch ein Diaphragma geteilten Reaktionsräumen.

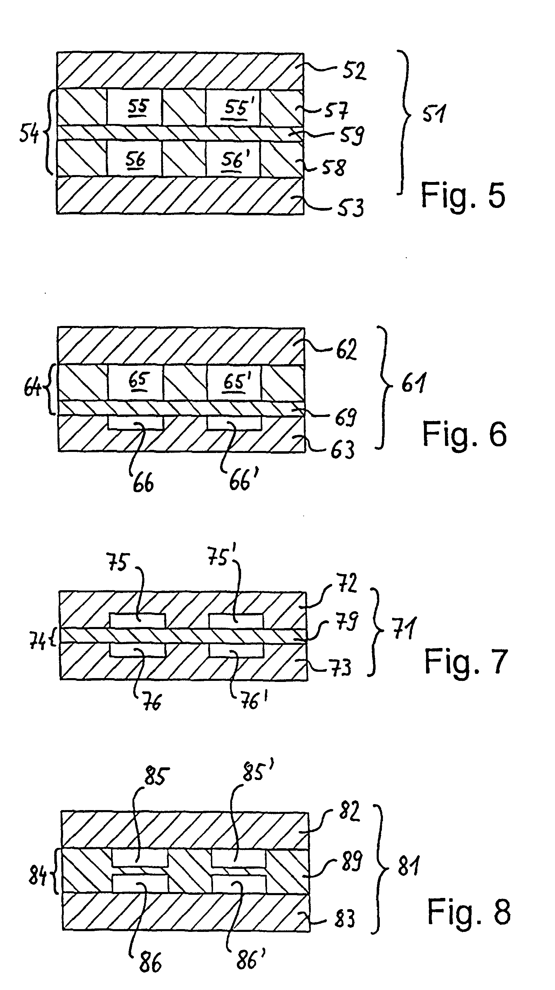

Der Reaktor 51 nach Fig. 5 weist zwischen den Elektroden 52, 53 einen Kapillarspalt 54 auf, in dem zur Trennung der Reaktionsräume eine ionenleitende Folie als Diaphragma 59 angeordnet ist. Zwischen dem Diaphragma 59 und jeweils einer Elektrode 52 bzw. 53 befindet sich eine geschlitzte Folie 57 bzw. 58. Damit liegen beidseitig des Diaphragmas 59 Kanäle 55, 55' sowie 56, 56', jeweils einer Höhe kleiner gleich 200 µm, als Reaktionsräume vor, wobei jeweils zwei Kanäle 55, 56 und 55', 56' gegenüberliegend, nur vom Diaphragma 59 getrennt, angeordnet sind.

Gemäß des Reaktors 61 nach Fig. 6 werden die Kanäle 66, 66' zwischen dem Diaphragma 69 und der unteren Elektrode 63 durch Nuten in der Elektrodenoberfläche gebildet. Die Kanäle 65, 65' zwischen dem Diaphragma 69 und der oberen Elektrode 62 werden durch Schlitze in der Isolierfolie 67 gebildet. In dem Kapillarspalt 64 zwischen den beiden Elektroden 62, 63 ist die Isolierfolie 67 sowie das Diaphragma 69 angeordnet.

Ein Reaktor 71, der in dem Kapillarspalt 74 zwischen den beiden Elektroden 72, 73 nur ein Diaphragma 79 aufweist, ist in Fig. 7 schematisch dargestellt. Zur Bildung von Kanälen 75, 75' und 76, 76' sind in den Oberflächen der Elektroden 72 bzw. 73 Nuten vorgesehen. In dem Bereich der Stege zwischen den Nuten dient das Diaphragma als Isolierschicht zwischen den Elektroden 72, 73.

Es ist jedoch auch möglich, in dem Kapillarspalt 84 zwischen den Elektroden 82, 83 einen einstückigen Körper 89 vorzusehen, der sowohl als Diaphragma als auch als Körper mit Nuten zur Bildung von Kanälen 85, 85', 86, 86' einer Höhe kleiner gleich 200 µm dient (Fig. 8). Damit wird ein sehr einfacher Aufbau des Reaktors 81 aus plattenartigen Elektroden 82, 83 mit einem beispielsweise im Spritzgußverfahren oder durch Prägen hergestellten, mikrostrukturierten Körper 89, beispielsweise aus einem ionenleitenden Polymer, ermöglicht. Dieser schichtartige, modulare Aufbau gestattet eine kostengünstige Fertigung und Wartung des Reaktors.

### Verfahrensbeispiel

Im folgenden werden anhand der elektrochemischen Oxidation von 4-Methoxymethylbenzol zu 4-Methoxybenzaldehyd die Ergebnisse von zwei Umsetzungen in zwei unterschiedlichen erfindungsgemäßen Reaktoren mit Kanälen einer Höhe von 75 µm bzw. 25 µm sowie zum Vergleich ein veröffentlichtes, mit einem herkömmlichen Reaktor mit einem Kapillarspalt von 500 µm erhaltenes Ergebnis angeführt.

In dem ersten erfindungsgemäßen Reaktor mit einem Kapillarspalt der Höhe h=75 µm zwischen zwei ebenen, plattenartigen Elektroden, wobei die Kathode aus Edelstahl und die Anode aus Glaskohlenstoff bestand, befand sich eine geschlitzte Isolierfolie aus Polyimid der Dicke 75 µm. Die parallel angeordneten, geradlinigen Schlitze wiesen eine Breite b=250 µm und eine Länge I=45 mm auf. Die Fluidzuführung und -abführung erfolgte über Strukturen in den Elektroden. Die Wärmeabfuhr erfolgte über das Gehäuse des Reaktors.

Der zweite erfindungsgemäße Reaktor unterschied sich vom ersten Reaktor durch die Höhe des Kapillarspaltes von h=25 µm, die Breite der Kanäle b= 800 µm sowie durch deren Länge l=64 mm.

Gemäß der ersten Umsetzung in dem ersten Reaktor wurde eine 0,1 mol/l Lösung von 4-Methoxymethylbenzol in Methanol, die 0,1 mol/l Kaliumfluorid als Leitsalz enthielt, mit einem Volumenstrom von 0,1 ml/min je Kanal geleitet. Die angelegte Zellspannung zwischen den Elektroden betrug 4 bis 10 V bei einer Stromdichte von 79 mA/ cm². Die zweite Umsetzung mit dem zweiten Reaktor wurde mit einer 2,0 mol/l Lösung von 4-Methoxymethylbenzol in Methanol, die nur 0,01 mol/l Kaliumfluorid als Leitsalz enthielt, bei sonst gleichen Reaktionsparametern durchgeführt.

Der Gehalt der aus den Kanälen strömenden Lösung an dem Edukt und den Produkten (4-Methoxybenzaldehyd und 4-Methoxybenzaldehyddimethylacetal) wurde mittels HPLC untersucht. Die in Abhängigkeit von der Reaktionstemperatur aus den Meßwerten berechneten Werte für die Umsetzung bezogen auf das Edukt und für die Selektivität der Reaktion und die Ausbeute bezogen auf die Produkte sind in der Tabelle 1 aufgeführt.

Der in Tab. 1 aufgeführte Vergleichswert wurde der DE-OS 28 48 397 entnommen und bezieht sich auf die gleiche Reaktion, jedoch durchgeführt in einem herkömmlichen Reaktor mit einem Kapillarspalt von 500 µm zwischen den aus Graphit bestehenden Elektroden. Der Eduktstrom enthielt eine 0,7 mol/l Lösung von 4-Methoxymethylbenzol in Methanol, die 0,1 mol/l Kaliumfluorid aufwies. Die Produktlösung wurde destillativ aufgearbeitet. Die Werte für die Umsetzung und die Selektivität wurden aus den angegebenen Werten berechnet.

**Tab. 1**

| Elektrochemische Umsetzung von 4-Methoxymethylbenzol. | | | | |
|---|---|---|---|---|
| **Nr.** | **Temperatur** | **Umsetzung** | **Selektivität** | **Ausbeute** |
| **1** | 20 °C | 96,8 % | 98,8 % | 95,6 % |
| **2** | 50-60°C | 94,5 % | 89,7 % | 73,2 % |
| **Vergleich** | 24-25°C | ca. 98 % | ca. 59 % | 57,7 % |

Aus dem Vergleich der Werte zu den Positionen 1 und 2 mit denen des Vergleichsversuchs ist offensichtlich, daß mit dem erfindungsgemäßen Verfahren unter Einsatz des erfindungsgemäßen Reaktors gegenüber bekannten Verfahren unter Verwendung herkömmlicher Reaktoren eine beträchtliche Steigerung der Selektivität von 59 % auf fast 99 % bzw. 90 % erreicht werden konnte.

Das erfindungsgemäße Verfahren sowie der beschriebene Reaktor sind besonders vorteilhaft auch für alle in der DE-OS 28 48 397 erwähnten elektrochemischen Umsetzungen geeignet.

### Bezugszeichenliste

- 1: Reaktor
- 2: Elektrode
- 3: Gegenelektrode
- 4: Kapillarspalt
- 5: Kanal
- 6: Isolierfolie
- 7: Schlitz
- 8, 8': Bohrung
- 9, 9': Bohrung
- 21, 21': Reaktor
- 22: Elektrode
- 23: Gegenelektrode
- 24: Kapillarspalt
- 25, 25', 25": Kanal
- 26: Isolierfolie
- 27, 27', 27": Schlitz
- 29, 29': Bohrung
- 30: Zuführungsverteiler
- 31: Abführungsverteiler
- 35, 35', 35": Nut
- 36: Temperierelement
- 37: Bohrung
- 41: Reaktor
- 42, 42': Elektrode
- 43, 43': Gegenelektrode
- 44, 44', 44": Kapillarspalt
- 45, 45', 45": Kanal
- 46, 46', 46": Kanal
- 47, 47', 47": Kanal
- 48, 48': elektrische Zuleitungen
- 51: Reaktor
- 52: Elektrode
- 53: Gegenelektrode
- 54: Kapillarspalt
- 55, 55': Kanal
- 56, 56': Kanal
- 57: Isolierfolie
- 58: Isolierfolie
- 59: Diaphragma
- 61: Reaktor
- 62: Elektrode
- 63: Elektrode
- 64: Kapillarspalt
- 65, 65': Kanal
- 66, 66': Kanal
- 67: Isolierfolie
- 69: Diaphragma
- 71: Reaktor
- 72: Elektrode
- 73: Gegenelektrode
- 74: Kapillarspalt
- 75, 75': Kanal
- 76, 76': Kanal
- 79: Diaphragma
- 81: Reaktor
- 82: Elektrode
- 83: Gegenelektrode
- 84: Kapillarspalt
- 85, 85': Nut
- 86, 86': Nut
- 89: mikrostrukturierter Körper

## Patentansprüche

1. Reaktor zur Durchführung elektrochemischer Umsetzungen mit mindestens einer Elektrode und einer Gegenelektrode, wobei die Elektroden durch einen Kapillarspalt voneinander getrennt sind,
**dadurch gekennzeichnet, daß**
der Kapillarspalt mindestens einen Kanal einer Höhe kleiner gleich 200 µm und einer Breite b kleiner gleich 10 mm als Reaktionsraum aufweist.

2. Reaktor nach Anspruch 1, **dadurch gekennzeichnet, daß** der Kapillarspalt mehrere Kanäle einer Höhe kleiner gleich 200 µm aufweist.

3. Reaktor nach Anspruch 1 oder 2, **dadurch gekennzeichnet, daß** der Kapillarspalt eine Höhe von 1 µm bis 100 µm aufweist.

4. Reaktor nach einem der vorhergehenden Ansprüche, **dadurch gekennzeichnet, daß** der Kanal bzw. die Kanäle jeweils geradlinig oder mäanderförmig verlaufen.

5. Reaktor nach einem der vorhergehenden Ansprüche, **dadurch gekennzeichnet, daß** der Kanal bzw. die Kanäle eine Breite b von 5 µm bis 1 mm aufweisen.

6. Reaktor nach einem der vorhergehenden Ansprüche, **dadurch gekennzeichnet, daß** das Verhältnis der Breite b zur Länge I des Kanals bzw. der Kanäle kleiner als 1 : 5 beträgt.

7. Reaktor nach Anspruch 6, **dadurch gekennzeichnet, daß** das Verhältnis der Breite b zur Länge I kleiner als 1 : 50 beträgt.

8. Reaktor nach einem der vorhergehenden Ansprüche, **dadurch gekennzeichnet, daß** der Querschnitt des Kanals bzw. der Kanäle Ober die Kanallänge im wesentlichen gleich ist.

9. Reaktor nach einem der vorherigen Ansprüche, **dadurch gekennzeichnet, daß** in dem Kapillarspalt zwischen den Elektroden eine Isolierschicht angeordnet ist, die zur Bildung des Kanals bzw. der Kanäle eine Ausnehmung bzw. mehrere Ausnehmungen aufweist.

10. Reaktor nach Anspruch 9, **dadurch gekennzeichnet, daß** die Isolierschicht eine Isolierfolie ist, die zur Bildung des Kanals bzw. der Kanäle einen Schlitz bzw. mehrere Schlitze aufweist.

11. Reaktor nach einem der vorherigen Ansprüche, **dadurch gekennzeichnet, daß** mindestens eine Elektrode Ausnehmungen zur Fluidzuführung und/oder Fluidabführung aufweist.

12. Reaktor nach einem der vorherigen Ansprüche, **dadurch gekennzeichnet, daß** mindestens eine Elektrode im Bereich des Kanals bzw. der Kanäle des Kapillarspalts eine plane Oberfläche aufweist.

13. Reaktor nach einem der Ansprüche 1 bis 12, **dadurch gekennzeichnet, daß** mindestens eine Elektrode jeweils im Bereich des Kanals bzw. der Kanäle des Kapillarspalts eine Nut aufweist.

14. Reaktor nach einem der vorhergehenden Ansprüche, **dadurch gekennzeichnet, daß** der Kapillarspalt zwischen den Elektroden ein Diaphragma aufweist, wobei zwischen dem Diaphragma und mindestens einer Elektrode mindestens ein Kanal einer Höhe kleiner gleich 200 µm vorhanden ist.

15. Reaktor nach Anspruch 14, **dadurch gekennzeichnet, daß** das Diaphragma eine Isolierschicht bildet.

16. Reaktor nach Anspruch 14 oder 15, **dadurch gekennzeichnet, daß** das Diaphragma zur Bildung des Kanals oder der Kanäle eine Nut bzw. Nuten aufweist.

17. Reaktor nach einem der vorherigen Ansprüche, **dadurch gekennzeichnet, daß** mindestens ein Temperierelement mit mindestens einer Elektrode thermisch verbunden ist.

18. Reaktor nach einem der vorhergehenden Ansprüche, **dadurch gekennzeichnet, daß** mindestens eine Elektrode als Temperierelement ausgebildet ist.

19. Reaktor nach einem der vorhergehenden Ansprüche, **gekennzeichnet durch** mehrere plattenförmige, im wesentlichen parallel zueinander angeordnete Elektroden.

20. Reaktor nach Anspruch 19, **dadurch gekennzeichnet, daß** den beiden Seiten einer plattenförmigen Elektrode jeweils eine Gegenelektrode gegenüberliegend angeordnet ist.

21. Verfahren zur Durchführung einer elektrochemischen Umsetzung mindestens eines in einem Eduktstrom enthaltenen Edukts in einem Reaktor mit mindestens einer Elektrode und einer Gegenelektrode, wobei die Elektroden durch einen Kapillarspalt voneinander getrennt sind,
**dadurch gekennzeichnet, daß**
der Eduktstrom durch mindestens einen im Kapillarspalt vorhandenen, als Reaktionsraum dienenden Kanal einer Höhe kleiner gleich 200 µm und einer Breite b kleiner gleich 10 mm geleitet wird, wobei der Volumenstrom des Eduktstroms derart bemessen wird, daß die Strömung des Eduktstroms über die Länge des Kanals laminar ist.

22. Verfahren nach Anspruch 21, **dadurch gekennzeichnet, daß** der Eduktstrom in mehrere Teilströme aufgespalten wird, wobei die Teilströme durch jeweils einen im Kapillarspalt vorhandenen, als Reaktionsraum dienenden Kanal einer Höhe kleiner gleich 200 µm und einer Breite b kleiner gleich 10 mm geleitet werden, wobei der Volumenstrom des Eduktstroms derart bemessen wird, daß jeweils die Strömung der Teilströme laminar ist.

23. Verfahren nach einem der Ansprüche 21 oder 22, **dadurch gekennzeichnet, daß** ein Reaktor nach einem der Ansprüche 1 bis 20 verwendet wird, oder daß mehrere fluidisch parallel geschaltete Reaktoren nach einem der Ansprüche 1 bis 20 verwendet werden.

24. Verfahren nach einem der Ansprüche 21 bis 23, **dadurch gekennzeichnet, daß** das Edukt ein in 4-Stellung substituiertes Methylbenzol ist, das elektrochemisch zu in 4-Stellung substituiertem Benzaldehyd oder Benzaldehydacetal oxidiert wird.

25. Verfahren nach Anspruch 24, **dadurch gekennzeichnet, daß** das Edukt 4-Methoxymethylbenzol ist, das in Gegenwart von Methanol als Lösungsmittel und Kaliumfluorid mit einer Konzentration von 0 bis 0,1 mol/l zu 4-Methoxybenzaldehyd oxidiert wird.

26. Verfahren nach einem der Ansprüche 21 bis 25, **dadurch gekennzeichnet, daß** der Eduktstrom kein Leitsalz aufweist.

## Claims

1. Reactor for carrying out electrochemical reactions having at least one electrode and one counter-electrode, wherein the electrodes are separated from one another by a capillary gap, **characterised in that** the capillary gap has at least one channel of height less than 200 µm and a width b less than 10 mm as the reaction chamber.

2. Reactor according to claim 1, **characterised in that** the capillary gap has several channels of height less than 200 µm.

3. Reactor according to claim 1 or 2, **characterised in that** the capillary gap has a height of 1 µm to 100 µm.

4. Reactor according to one of the preceding claims, **characterised in that** the channel or the channels run in each case in a straight line or meandering.

5. Reactor according to one of the preceding claims, **characterised in that** the channel or the channels have a width b of 5 µm to 1 mm.

6. Reactor according to one of the preceding claims, **characterised in that** the ratio of the width b to the length 1 of the channel or the channels is less than 1: 5.

7. Reactor according to claim 6, **characterised in that** the ratio of the width b to the length 1 is less than 1:50.

8. Reactor according to one of the preceding claims, **characterised in that** the cross-section of the channel or the channels is essentially the same over the channel length.

9. Reactor according to one of the preceding claims, **characterised in that** an insulating layer, which has a recess or several recesses to form the channel or the channels, is arranged in the capillary gap between the electrodes.

10. Reactor according to claim 9, **characterised in that** the insulating layer is an insulating film, which has one slot or several slots to form the channel or the channels.

11. Reactor according to one of the preceding claims, **characterised in that** at least one electrode has recesses for supplying fluid and/or removing fluid.

12. Reactor according to one of the preceding claims, **characterised in that** at least one electrode has a flat surface in the region of the channel or the channels of the capillary gap.

13. Reactor according to one of claims I to 12, **characterised in that** at least one electrode has a groove in each case in the region of the channel or the channels of the capillary gap.

14. Reactor according to one of the preceding claims, **characterised in that** the capillary gap between the electrodes has a diaphragm, wherein at least one channel of height less than 200 µm is present between the diaphragm and at least one electrode.

15. Reactor according to claim 14, **characterised in that** the diaphragm forms an insulating layer.

16. Reactor according to claim 14 or 15, **characterised in that** the diaphragm has a groove or grooves to form the channel or the channels.

17. Reactor according to one of the preceding claims, **characterised in that** at least one tempering element is thermally connected to at least one electrode.

18. Reactor according to one of the preceding claims, **characterised in that** at least one electrode is designed as a tempering element.

19. Reactor according to one of the preceding claims, **characterised by** several plate-like electrodes arranged essentially parallel to one another.

20. Reactor according to claim 19, **characterised in that** in each case one counter-electrode is arranged opposite the two sides of a plate-like electrode.

21. Process for carrying out an electrochemical reaction of at least one educt present in an educt stream in a reactor having at least one electrode and a counter-electrode,
wherein the electrodes are separated from one another by a capillary gap,
**characterised in that** the educt stream is passed through at least one channel of height less than 200 µm and a width b less than 10 mm serving as the reaction chamber and which is present in the capillary gap, wherein the volume flow of the educt stream is measured such that the flow of the educt stream is laminar over the length of the channel.

22. Process according to claim 21, **characterised in that** the educt stream is divided into several part streams, wherein the part streams are passed through in each case one channel of height less than 200 µm and a width b less than 10 mm serving as the reaction chamber and which is present in the capillary gap, wherein the volume flow of the educt stream is measured such that in each case the flow of the part streams is laminar.

23. Process according to one of claims 21 or 22, **characterised in that** a reactor according to one of claims 1 to 20 is used, or **in that** several reactors connected in fluid parallel manner according to one of claims 1 to 20 are used.

24. Process according to one of claims 21 to 23, **characterised in that** the educt is a methylbenzene substituted in 4 position, which is oxidised electrochemically to give benzaldehyde substituted in 4 position or benzaldehyde acetal.

25. Process according to claim 24, **characterised in that** the educt is 4-methoxymethylbenzene, which is oxidised in the presence of methanol as solvent and potassium fluoride at a concentration of 0 to 0.1 mole/litre to give 4-methoxybenzaldehyde.

26. Process according to one of claims 21 to 25, **characterised in that** the educt stream does not have conducting salt.

## Revendications

1. Réacteur pour effectuer des réactions électrochimiques avec au moins une anode et une cathode, les électrodes étant séparées l'une de l'autre par interstice capillaire
**caractérisé en ce que**
l'interstice capillaire présente au moins un canal d'une hauteur inférieure à 200 µm et d'une largeur b inférieure à 10 mm comme chambre de réaction.

2. Réacteur selon la revendication 1, **caractérisé en ce que** l'interstice capillaire présente plusieurs canaux d'une hauteur de 200 µm.

3. Réacteur selon la revendication 1 ou 2, **caractérisé en ce que** l'interstice capillaire présente une hauteur de 1 µm à 100 µm.

4. Réacteur selon l'une des revendications précédentes, **caractérisé en ce que** le canal ou les canaux courent respectivement en ligne droite ou en forme de méandres.

5. Réacteur selon l'une des revendications précédentes, **caractérisé en ce que** le canal ou les canaux présentent une largeur b de 5 µm à 1 mm.

6. Réacteur selon l'une des revendications précédentes, **caractérisé en ce que** le rapport de la largeur b sur la longueur 1 du canal ou des canaux est inférieur à 1 : 5.

7. Réacteur selon la revendication 6, **caractérisé en ce que** le rapport de la largeur b sur la longueur 1 est inférieur à 1 : 50.

8. Réacteur selon l'une des revendications précédentes, **caractérisé en ce que** la coupe transversale du canal ou des canaux est essentiellement la même sur la longueur du canal.

9. Réacteur selon l'une des revendications précédentes, **caractérisé en ce que** l'on dispose, dans l'interstice capillaire séparant les électrodes, d'une couche isolante présentant un évidement ou plusieurs évidements pour former le canal ou les canaux.

10. Réacteur selon la revendication 9, **caractérisé en ce que** la couche isolante est un film isolant qui présente une ou plusieurs fentes pour former le canal ou les canaux.

11. Réacteur selon l'une des revendications précédentes, **caractérisé en ce qu'**au moins une électrode présente des évidements pour l'amenée du fluide et/ou l'évacuation du fluide.

12. Réacteur selon l'une des revendications précédentes, **caractérisé en ce qu'**au moins une électrode présente une surface plane dans la zone du canal ou des canaux de l'interstice capillaire.

13. Réacteur selon l'une des revendications 1 à 12, **caractérisé en ce qu'**au moins une électrode présente une rainure dans la zone du canal ou des canaux de l'interstice capillaire.

14. Réacteur selon l'une des revendications précédentes, **caractérisé en ce que** l'interstice capillaire entre les électrodes présente un diaphragme, au moins un canal d'une hauteur inférieure à 200 µm étant présent entre le diaphragme et au moins une électrode.

15. Réacteur selon la revendication 14, **caractérisé en ce que** le diaphragme forme une couche isolante.

16. Réacteur selon la revendication 14 ou 15, **caractérisé en ce que** le diaphragme présente une rainure ou des rainures pour former le canal ou les canaux.

17. Réacteur selon l'une des revendications précédentes, **caractérisé en ce qu'**au moins un thermoélément est relié thermiquement à au moins une électrode.

18. Réacteur selon l'une des revendications précédentes, **caractérisé en ce qu'**au moins une électrode est conçue comme thermoélement.

19. Réacteur selon l'une des revendications précédentes, **caractérisé par** plusieurs électrodes en forme de plaques disposées essentiellement parallèlement les unes aux autres.

20. Réacteur selon la revendication 19, **caractérisé en ce qu'**une anode est disposée respectivement en face de chacune des deux faces d'une cathode en forme de plaque.

21. Procédé pour effectuer une réaction électrochimique d'au moins un éduit contenant un flux d'éduit dans un réacteur avec au moins une anode et une cathode, les électrodes étant séparées l'une de l'autre par un interstice capillaire,
**caractérisé en ce que**
le flux d'éduit est conduit par au moins un canal présent dans l'interstice capillaire servant de chambre de réaction, d'une hauteur inférieure à 200 µm et d'une largeur b inférieure à 10 mm, le débit du flux d'éduit étant mesuré de manière à ce que le courant du flux d'éduit sur la longueur du canal soit laminaire.

22. Procédé selon la revendication 21, **caractérisé en ce que** le flux d'éduit est divisé en plusieurs flux partiels, les flux partiels étant conduits par respectivement un canal présent dans l'interstice capillaire servant de chambre de réaction d'une hauteur inférieure à 200 µm et d'une largeur b inférieure à 10 mm, le débit du flux d'éduit étant mesuré de manière à ce que le courant du flux d'éduit sur la longueur du canal soit laminaire.

23. Procédé selon l'une des revendications 21 à 22, **caractérisé en ce qu'**un réacteur est utilisé selon l'une des revendications 1 à 20 ou **en ce que** plusieurs réacteurs montés en parallèle au niveau des fluides sont utilisés selon l'une des revendications 1 à 20.

24. Procédé selon l'une des revendications 21 à 23, **caractérisé en ce que** l'éduit est un méthylbenzène substitué en position 4, oxydé électrochimiquement en benzaldéhyde ou acétal benzaldéhyde substitué en position 4.

25. Procédé selon la revendication 24, **caractérisé en ce que** l'éduit est le 4-méthoxyméthylbenzène, oxydé en présence de méthanol comme solvant et de fluorure de potassium avec une concentration de 0 à 0,1 mol/l en 4-méthoxybenzaldéhyde.

26. Procédé selon l'une des revendications 21 à 25, **caractérisé en ce que** le flux d'éduit ne présente aucun sel conducteur.
